Europäisches Patentamt

European Patent Office

Office européen des brevets

(11) Numéro de publication: **0 480 113 A1**

## (12) DEMANDE DE BREVET EUROPEEN

(21) Numéro de dépôt: 90402845.3

(51) Int. Cl.5: **G02C 5/04**

(22) Date de dépôt: **11.10.90**

(43) Date de publication de la demande:
**15.04.92 Bulletin 92/16**

(84) Etats contractants désignés:
**AT BE CH DE DK ES FR GB GR IT LI LU NL SE**

(71) Demandeur: **Blanié, Paul**
**10, rue des petites Ecuries**
**F-75010 Paris(FR)**
Demandeur: **Binh, Paul**
**20 Boulevard Bell Rive**
**F-92500 Rueil Malmaison(FR)**

(72) Inventeur: **Blanié, Paul**
**10, rue des petites Ecuries**
**F-75010 Paris(FR)**
Inventeur: **Binh, Paul**
**20 Boulevard Bell Rive**
**F-92500 Rueil Malmaison(FR)**

(74) Mandataire: **Armengaud Ainé, Alain**
**Cabinet ARMENGAUD AINE 3 Avenue**
**Bugeaud**
**F-75116 Paris(FR)**

(54) **Lunettes perfectionnées.**

(57) Paire de lunettes perfectionnée caractérisée en ce qu'elle comporte sur la partie (14) de la monture reposant sur le nez de l'utilisateur, des moyens (16, 18, 22 ; 16,' 18', 20', 22') à orientation variable sur lesquels est monté le système correcteur de vision (24, 24') ces moyens étant conçus de façon à pouvoir déplacer dans deux dimensions au moins ledit système correcteur de vision afin de le positionner à l'endroit précis déterminé assurant une correction optimale de la vision, ces moyens pouvant être en outre positionnés sur la monture de façon démontable afin de permettre un changement rapide et facile du système correcteur de vision.

FIG.1

La présente invention est relative à des lunettes perfectionnées.

On sait que l'un des facteurs importants de l'obtention d'une bonne correction de la vision avec des lunettes classiques est la distance pupillaire, ce qui nécessite une adaptation des lunettes au cas particulier de chaque utilisateur. Par ailleurs, lorsque l'utilisateur est affecté d'amétropies différentes, nécessitant des verres correcteurs de types différents, il lui faut disposer de paires de lunettes distinctes adaptées à la correction de ces diverses amétropies respectives.

L'invention se propose d'apporter une paire de lunettes perfectionnée permettant notamment de résoudre les inconvénients des solutions classiques mentionnées ci-dessus, et en outre présentant l'avantage de pouvoir recevoir tout système optique pour améliorer ou adapter la vision dans certains cas particuliers (travaux précis d'usinage ou de montage par exemple).

L'invention a donc pour objet une paire de lunettes perfectionnée caractérisée en ce qu'elle comporte sur la partie de sa monture reposant sur le nez de l'utilisateur, des moyens à orientation variable sur lesquels est monté le système correcteur de vision, ces moyens étant réglables et conçus de manière à pouvoir déplacer dans deux dimensions au moins le système correcteur de vision afin de le positionner à l'endroit précis permettant d'assurer une correction optimale de la vision, ces moyens à orientation variable pouvant être en outre positionnés sur la monture de manière démontable afin de pouvoir faciliter un changement de sytème correcteur.

Selon un exemple de réalisation d'une paire de lunettes conforme à la présente invention, les moyens interchangeables à orientation variable recevant le système correcteur de vision sont constitués, de part et d'autre de la partie de la monture reposant sur le nez de l'utilisateur, d'une pièce rectiligne, sensiblement horizontale, munie d'un alésage axial dans lequel peut coulisser une tige qui est pourvue à son extrémité d'un axe d'articulation sur lequel est montée une tige portant le système correcteur de vision, le déplacement en translation de la tige coulissant dans ledit alésage et le déplacement en rotation de la tige portant le système correcteur de vision permettant de positionner avec précision ce système correcteur.

Selon un autre exemple de réalisation de l'invention, la tige portant le système correcteur de vision est montée à l'extrémité de ladite pièce coulissante par l'intermédiaire d'une articulation à rotule et le système correcteur de vision est monté à l'extrémité de ladite tige par l'intermédiaire d'une articulation à rotule de manière à obtenir un déplacement selon trois dimensions du système correcteur de vision

Selon l'invention chacune des tiges coulissant dans l'alésage axial de la pièce rectiligne des moyens à orientation variable est montée avec un frottement suffisant dans ledit alésage et chacune des tiges portant le système correcteur de vision est articulée également avec frottement à l'extrémité de la tige coulissante de telle manière que le système de correction de la vision demeure dans la position où l'utilisateur l'a placé. On peut naturellement prévoir en outre tout système de blocage de type approprié, par exemple un mécanisme cranté.

Selon l'invention, le système correcteur de vision peut être constitué notamment par tout système classique de verres correcteurs d'amétropies, par un système de loupes ou par un système correcteur de vision universel. En particulier ce système correcteur de vision universel peut comprendre une zone opaque entourant une petite zone centrale transparente située dans l'axe de vision, ce système formant diaphragme en créant une image rétinienne réduite donnant une vision nette, la zone opaque présentant un diamètre compris entre 3 et 8 mm et de préférence entre 5,5 et 6 mm afin de conserver la vision périphérique et la zone centrale transparente présentant un diamètre compris entre 0,6 et 2 mm et de préférence de l'ordre de 1 mm.

D'autres caractéristiques et avantages de la présente invention ressortiront de la description faite ci-après en référence au dessin annexé qui en illustre deux exemples de réalisation dépourvus de tout caractère limitatif. Sur le dessin :
- la figure 1 est une vue schématique en perspective d'une paire de lunettes perfectionnée selon l'invention dont le sytème correcteur de vision est constitué par le dispositif décrit dans la demande de brevet européen 0141736 mentionnée ci-dessus et ;
- la figure 2 est une vue similaire à la figure 1 comportant un système correcteur constitué par une paire de loupes.

En se référant au dessin on voit que la paire de lunettes perfectionnée selon la présente invention comprend de manière classique une monture 10 avec une partie 14 venant reposer sur le nez de l'utilisateur et des branches telles que 12. Sur la partie 14 on prévoit des pièces rectilignes 16, 16', montées fixes sur cette partie 14, en en faisant saillie de manière sensiblement horizontale. Chacune de ces pièces 16, 16' est pourvue d'un alésage axial dans lequel est monté le dispositif qui supporte le système correcteur de vision. Ce montage est réalisé de manière à pouvoir positionner de façon précise le système correcteur de vision, quelle que soit la conformation physique de l'utilisateur et l'amétropie à corriger en respectant notamment la distance pupillaire. Par ailleurs, ce montage est conçu de manière à permettre un changement immédiat du système correcteur de vision. On notera qu'il est particulièrement important que les moyens décrits ci-après recevant le système correcteur de vision soient montés sur la partie de la monture 14 étant donné que seule cette position permet de rendre invisible à l'utilisateur ces moyens de montage et de support.

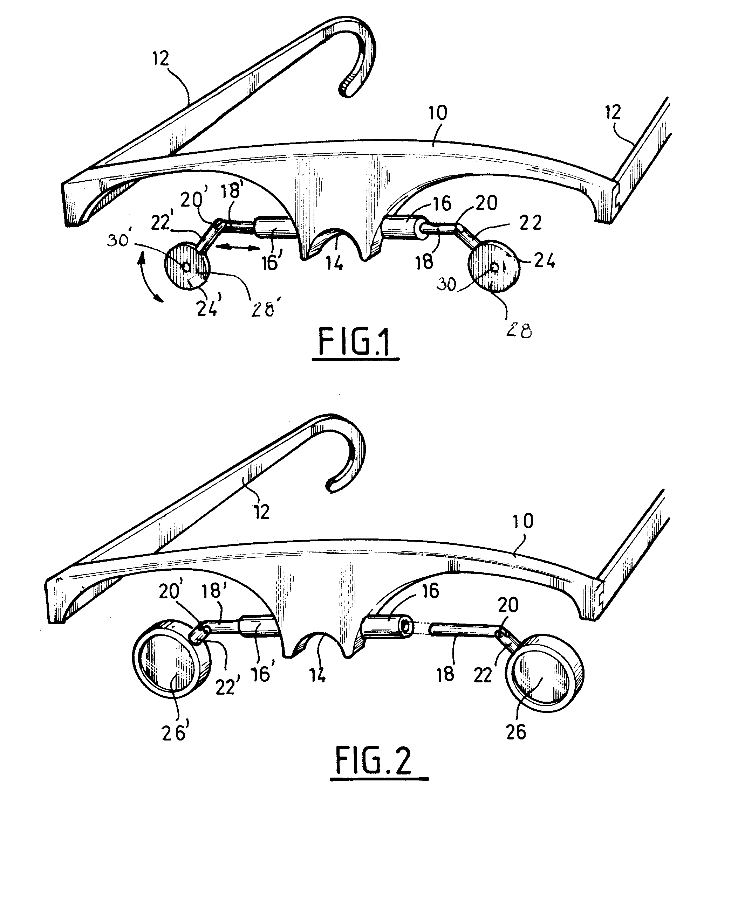

Dans l'exemple de réalisation illustré par le dessin les moyens à orientation variable recevant le système correcteur de vision comportent des tiges, de préférence rectilignes 18, 18' qui sont montées de façon à pouvoir coulisser avec un frottement suffisant dans l'alésage axial respectif des pièces 16, 16'. A leur extrémité opposée à l'alésage dans lequel elle coulisse, chacune des tiges 18, 18' comporte un axe d'articulation 20, 20' sur lequel est montée à rotation une tige 22, 22', respectivement dont l'extrémité supporte un système correcteur de la vision 24, 24' (figure 1) et 26, 26' (figure 2), respectivement. L'articulation de chaque tige telle que 22, 22' sur la tige correspondante 18, 18' est réalisée avec un frottement suffisant de manière que le système correcteur de vision puisse demeurer dans la position précise où l'utilisateur l'a placé. On peut naturellement prévoir en outre un système de blocage de tout type tel que notamment un mécanisme cranté.

On comprend de l'examen du dessin ci-joint que le positionnement précis du système correcteur de vision pour son adaptation à chaque cas particulier s'effectue de manière très simple : il suffit à l'utilisateur de faire coulisser chacune des tiges telle que 18, 18' dans l'alésage axial correspondant de la pièce rectiligne correspondante 16, 16' puis de faire tourner chaque tige 22, 22', par rapport à la tige correspondante 18, 18' de manière à amener chaque système correcteur de vision à l'emplacement précis permettant la correction efficace du défaut de vision de l'utilisateur. Compte tenu du fait que les différentes pièces mobiles des moyens recevant le système correcteur de vision sont montées à frottement doux, elles restent dans la position où l'utilisateur les a placées, sans qu'il soit nécessaire de prévoir des moyens de blocage de cette position.

Il est également très facile à l'utilisateur de remplacer un système correcteur de vision par tout autre système correcteur de son choix : en effet il lui suffit d'enlever le système correcteur en place sur la paire de lunettes en faisant coulisser chaque tige 18, 18' dans son alésage correspondant jusqu'à ce qu'elle soit extraite dudit alésage et de mettre en place ensuite un autre système correcteur en introduisant chaque tige correspondante telle que 18, 18' dans l'alésage correspondant de la pièce 16, 16' de la monture, les réglages s'effectuant ensuite comme décrit précédemment.

Selon une variante de cette invention, les systèmes correcteurs de vision sont montés sur la paire de lunettes de façon à pouvoir être déplacés dans trois dimensions. A cet effet, on prévoit une articulation à rotule à la place de chacun des axes d'articulation 20, 20' et une autre articulation à rotule pour fixer chaque système correcteur de vision 24, 24' à l'extrémité de chacune des tiges supports respectives 22, 22'. Grâce à cette variante on améliore encore la précision du positionnement des systèmes correcteurs de vision qui peuvent être ainsi rapprochés de la cornée de manière à améliorer le champ. Bien entendu ces articulations à rotule peuvent être réalisées avec un frottement suffisant afin d'obtenir un autoblocage comme indiqué ci-dessus ou bien on peut prévoir des systèmes de blocage différents

Dans l'application de l'invention illustrée par la figure 1 le système correcteur de vision 24, 24' est constitué par un correcteur universel qui comporte une zone opaque 28, 28' respectivement entourant une petite zone centrale transparente 30, 30' respectivement située dans l'axe de vision, ce système formant diaphragme en créant une image rétinienne réduite donnant une vision nette. Selon la présente invention, la zone opaque 28, 28' présente un diamètre compris entre 3 et 8 mm et de préférence entre 5,5 et 6 mm de manière à conserver la vision périphérique alors que la zone centrale transparente 30, 30' présente un diamètre qui est compris entre 0,6 et 2 mm et de préférence de l'ordre de 1 mm. L'application particulière de la présente invention à ce système correcteur original est importante car elle permet de tirer un profit optimal des caractéristiques d'un tel système correcteur de vision.

Dans l'exemple d'application illustré par la figure 2 le système correcteur de vision est constitué par une paire de loupes 26, 26'. Une telle application est particulièrement intéressante pour les personnes exécutant des travaux précis, notamment les horlogers, ces personnes utilisant jusqu'à présent des systèmes de loupes venant s'appliquer sur le globe oculaire et dont l'emploi est à la fois peu pratique et peu confortable. Par ailleurs, l'interchangeabilité facile du système correcteur de vision permet de choisir la paire de loupes convenant à tous travaux particuliers.

Parmi les avantages apportés par la présente invention on peut citer notamment les suivants :
- possibilité de régler la distance interpupillaire de façon non symétrique tout en offrant une possibilité de réglage de la position de chaque système correcteur de vision indépendemment l'un de l'autre, par orientation de ce système afin d'obtenir une adaptation au type de vision recherchée (rapprochée ou éloignée);

- possibilité de réduire dans des proportions importantes les dimensions des différents systèmes de vision pouvant être montés sur la lunette objet de l'invention ce qui permet notamment le montage de loupes de petites dimensions particulièrement économiques permettant de remplacer dans certains cas les microscopes utilisées pour effectuer des opérations délicates notamment des soudures de composants électroniques, cette possibilité augmentant de façon considérable le confort de l'utilisateur.

Bien entendu, on peut également utiliser des verres correcteurs classiques, cette invention n'étant nullement limitée aux exemples de réalisation et d'application décrits et mentionnés ci-dessus.

**Revendications**

1. Paire de lunettes perfectionnée caractérisée en ce qu'elle comporte sur la partie (14) de la monture reposant sur le nez de l'utilisateur, des moyens (16, 18, 20, 22 ; 16,' 18', 20', 22') à orientation variable sur lesquels est monté le système correcteur de vision (24, 24') ces moyens étant conçus de façon à pouvoir déplacer dans deux dimensions au moins ledit système correcteur de vision afin de le positionner à l'endroit précis déterminé assurant une correction optimale de la vision, ces moyens pouvant être en outre positionnés sur la monture de façon démontable afin de permettre un changement rapide et facile du système correcteur de vision.

2. Paire de lunettes selon la revendication 1 caractérisée en ce que les moyens à orientation variable recevant le système correcteur de vision sont constitués, de part et d'autre de la partie (14) de la monture reposant sur le nez de l'utilisateur, par une pièce rectiligne (16, 16'), sensiblement horizontale munie d'un alésage axial dans lequel peut coulisser une tige (18, 18') qui est pourvue à son extrémité d'un axe d'articulation (20, 20') sur lequel est montée une tige (22, 22') portant le système correcteur de vision (24, 24'), le déplacement en translation de ladite tige (18, 18') dans son alésage correspondant et le déplacement en rotation de la tige (22, 22') portant le système correcteur de vision permettant de positionner ce système avec précision.

3. Paire de lunettes selon l'une quelconque des revendications précédentes caractérisée en ce que chaque tige (18, 18') est montée à frottement dans l'alésage de la pièce rectiligne correspondante (16, 16') et en outre chaque tige (22, 22') est articulée également avec frottement à l'extrémité de la tige coulissante (18, 18') afin que le système correcteur de vision demeure dans la position où l'utilisateur l'a placé.

4. Paire de lunettes selon l'une quelconque des revendications précédentes caractérisée en ce que le système correcteur de vision (24, 24') est constitué par un correcteur universel de vision comprenant une zone opaque (28, 28') entourant une petite zone centrale transparente (30, 30') située dans l'axe de vision, ce système formant diaphragme en créant une image rétinienne réduite donnant une vision nette.

5. Paire de lunettes selon la revendication 4, caractérisée en ce que la zone opaque (28, 28') présente un diamètre compris entre 3 et 8 mm et de préférence entre 5,5 et 6 mm afin de conserver la vision périphérique et la zone centrale transparente (30, 30') présente un diamètre compris entre 0,6 et 2 mm et de préférence de l'ordre de 1 mm.

6. Paire de lunettes selon l'une quelconque des revendications 1 à 3 caractérisée en ce que le système correcteur de vision est constitué de verres classiques correcteurs d'amétropies.

7. Paire de lunettes selon l'une quelconque des revendications 1 à 3 caractérisée en ce que le système correcteur de vision est constitué d'une paire de loupes (26, 26').

8. Paire de lunettes selon l'une quelconque des revendications précédentes caractérisée en ce que les systèmes correcteurs de vision sont montés de façon à pouvoir se déplacer dans trois dimensions, la tige (22, 22') portant chaque système correcteur de vision (24, 24' ; 26,26') étant montée à l'extrémité de la pièce coulissante respective (18, 18') par l'intermédiaire d'une articulation à rotule et chaque système correcteur de vision étant monté à l'extrémité de la tige articulée (22, 22') correspondante, par l'intermédiaire d'une articulation à rotule ces articulations pouvant être réalisées à frottement de manière à obtenir un autoblocage dans la position recherchée par l'utilisateur.

FIG.1

FIG.2

# Office européen des brevets

## RAPPORT DE RECHERCHE EUROPEENNE

Numéro de la demande

**EP 90 40 2845**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 154 513   (W.O. GOULDEN)<br>* Figure 1; revendications *<br>— — — | 1,8 | G 02 C 5/04 |
| Y | FR-A-2 034 395   (J. PARTY et al.)<br>* Revendications *<br>— — — | 1 | |
| A | US-A-1 905 675   (N.M. BAKER)<br>* Page 1, lignes 1-45; revendications *<br>— — — | 1,6,7 | |
| D,A | EP-A-0 141 736   (P. BINH)<br>* Résumé *<br>— — — | 4,5 | |
| A | CH-A-648 417   (B. JÄGGI-OPTIK)<br>* Revendications *<br>— — — | 1 | |
| A | US-A-4 787 730   (A. BRISTOL)<br>* Résumé *<br>— — — | 1 | |
| A | GB-A-2 166 887   (UVEX WINTER OPTIC GmbH)<br>* Revendications *<br>— — — | 1 | |
| A | DE-B-150 743   (V. VIKTORIN)<br>* En entier *<br>— — — — — | 1 | |

| DOMAINES TECHNIQUES RECHERCHES (Int. Cl.5) |
|---|
| G 02 C 5/04<br>G 02 C 5/12<br>G 02 C 7/16 |

**Le présent rapport de recherche a été établi pour toutes les revendications**

| Lieu de la recherche | Date d'achèvement de la recherche | Examinateur |
|---|---|---|
| La Haye | 05 juin 91 | CALLEWAERT-HAEZEBROU |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
--------------------------------------------------------------------------
& : membre de la même famille, document correspondant